# DEMANDE DE BREVET EUROPEEN

(11) **EP 0 663 637 A1**
(43) Date de publication de la demande: **19.07.1995**
(21) Numéro de dépôt: 95200014.9
(22) Date de dépôt: 05.01.1995
(51) Int. Cl.: G06F 13/362

(54) **Support de communication pour équipement électronique à plusieurs processeurs répartis**

(30) Priorité: 12.01.1994 FR 9400266
(71) Demandeur: T.R.T. TELECOMMUNICATIONS RADIOELECTRIQUES ET TELEPHONIQUES, 75013 Paris (FR); PHILIPS ELECTRONICS N.V., 5621 BA Eindhoven (NL)
(72) Inventeur: Nguyen Thuy, Nam, F-75008 Paris (FR)
(74) Mandataire: Pyronnet, Jacques

(57) **Abrégé**

Ce support de communication qui relie entre eux n processeurs esclaves (P1, P2 ...,Pn) et un processeur maître (Pn+1), comporte un premier bus (1) de transmission de données, un deuxième bus (2) de signalisation série qui est le siège d'une trame de signalisation synchrone composée d'intervalles de temps (IT) alloués aux processeurs, et des moyens de synchronisation desdits intervalles de temps dans les processeurs. Des premiers moyens de comparaison sont prévus pour repérer dans chaque processeur l'apparition cyclique de l'IT qui lui est alloué, ainsi que des deuxièmes moyens de comparaison pour repérer, dans le processeur maître, l'apparition cyclique de chaque IT.

Application à un multiplexeur de services ATM.

## Description

La présente invention concerne un système de communication entre n + 1 processeurs, parmi lesquels l'un est un processeur maître et n sont des processeurs esclaves, comportant un premier bus de transmission de données.

Un équipement électronique moderne comporte un grand nombre de cartes à base de microprocesseur. Les processeurs de chaque carte communiquent entre eux par un bus de communication pour des besoins de gestion comme :
- la surveillance et l'exploitation des cartes de l'équipement,
- les communications à l'environnement extérieur des informations d'exploitation interne de l'équipement.

En général, l'un des processeurs de l'équipement, spécialisé, est utilisé comme passerelle entre les informations internes de l'équipement et l'organe de commande extérieur, ce dernier pouvant être local ou distant. A ce titre, le processeur spécialisé, maître de la gestion, est qualifié de "processeur maître", les autres processeurs étant dits "processeurs esclaves".

Le problème général qui se pose, pour le type de bus de communication précité est celui dit du droit de parole, des différents processeurs, étant entendu que chacun est susceptible d'émettre de l'information de façon aléatoire, alors que le bus ne peut passer qu'un message à la fois, ce qui se traduit par la notion d'évitement de collision. De plus, en cas de simultanéité (ou, en pratique, de quasi-simultanéité) d'accès au bus de communication, on peut souhaiter établir une hiérarchie entre processeurs, pour ce qui est de la priorité d'accès, ce qui complique encore le problème général exposé plus haut, en altérant légèrement le droit d'accès par ordre chronologique des demandes.

Lorsqu'on désire faire communiquer entre eux des équipements de transmission de données qui constituent un réseau local, par exemple, sur une zone géographiquement limitée, tels des équipements informatiques, ou des émetteurs-récepteurs, on utilise couramment une configuration de réseau consistant en un bus série asynchrone, à une seule liaison de transmission à laquelle les équipements sont connectés en dérivation, étant répartis le long du bus. Un tel réseau local, qui fonctionne en diffusion, est par exemple connu sous la marque ETHERNET de la société américaine XEROX CORPORATION. Il s'agit là d'un bus spécifique, d'autres exemples de ce type de bus étant le bus VME, ou l'Anneau à jeton (Token ring en anglais). L'intérêt de ces bus spécifiques est qu'ils permettent l'accès aléatoire et leurs inconvénients majeurs, qu'ils sont coûteux et encombrants sur les cartes des équipements.

D'autres bus, tels que bus série du type V11/V24 ou HDLC, ou des bus parallèles présentent l'avantage d'être plus économiques que les bus spécifiques mais ils présentent les inconvénients suivants :

Il y a un seul bus de communication pour toutes les cartes et, pour éviter la contention des messages, l'accès au bus peut être géré de l'une des manières suivantes :
- le processeur maître interroge successivement chacun des processeurs esclaves (polling en anglais), tel le protocole SEM de la société France-Télécom,
- chaque processeur a un temps d'accès limité et fixe par rapport à une synchronisation.

Dans ces cas, l'accès aléatoire du bus est difficile.

Le but de l'invention est de fournir un support de communication entre processeurs d'un équipement électronique qui soit à la fois économique et rapide, de façon à permettre un accès quasi aléatoire compatible avec la présence d'un processeur maître.

Selon l'invention, ce but est atteint et les inconvénients de l'art antérieur sont atténués grâce au fait que le système de communication comportant un premier bus de transmission de données défini au premier paragraphe est remarquable en ce qu'il comporte en outre d'une part un deuxième bus de signalisation série, de chaque processeur esclave vers le processeur maître, ainsi que des moyens de signalisation pour fournir au deuxième bus de signalisation une trame de signalisation synchrone composée de m intervalles de temps adjacents, parmi lesquels n sont alloués, spécifiquement, aux n processeurs esclaves, d'autre part au moins deux canaux d'horloge, dont un premier pour la transmission de l'horloge de base de ladite trame de signalisation, d'un générateur d'horloge, dans le processeur maître, aux processeurs esclaves, des premiers moyens de comparaison étant prévus pour identifier, dans chaque processeur esclave, l'apparition d'un numéro d'ordre dudit intervalle de temps qui lui est alloué, et des deuxièmes moyens de comparaison étant prévus, dans le processeur maître, pour identifier, à chaque trame de signalisation, les intervalles de temps alloués aux n processeurs esclaves.

Le bus-support de communication ainsi obtenu peut être qualifié de pseudo-aléatoire. Il ne s'agit pas d'un accès aléatoire proprement dit, en ce sens que l'accès d'un processeur au bus de données n'est pas immédiat même si ce dernier est libre, alors qu'il en est ainsi, dans le système Ethernet par exemple, si l'on néglige, dans ce système, le temps d'auto-écoute préalable du processeur pour s'assurer que son message de demande d'accès n'est pas brouillé. Cependant, la demande d'accès peut être satisfaite très rapidement, en une durée de trame environ, soit de l'ordre de quelques centièmes de seconde.

De plus, un mode de réalisation avantageux de l'invention, visant à réduire le prix et l'encombrement du support de communication est remarquable en ce que, pour la liaison de ce système de communication avec lesdits processeurs, ces derniers comportent des moyens d'insertion de trame, sur ledit bus de signalisation, au moins en émission pour les n processeurs esclaves, et au moins en réception pour le processeur maître.

De préférence, lesdits premiers moyens de comparaison consistent, dans chaque processeur esclave, en un premier compteur des impulsions qui marquent le début desdits intervalles de temps sur un canal d'horloge, à chaque trame de signalisation, et un comparateur, connecté au premier compteur, qui repère un numéro d'ordre spécifiquement alloué audit processeur esclave.

Un mode de réalisation préféré de l'invention est remarquable en ce que lesdits deuxièmes moyens de comparaison consistent, dans le processeur maître, en un deuxième compteur desdites impulsions marquant à chaque trame de signalisation, le début desdits intervalles de temps, qui repère le numéro d'ordre alloué à chaque processeur esclave.

Un autre mode de réalisation préféré de l'invention est remarquable en ce que lesdits deuxièmes moyens de comparaison, à caractère logiciel, consistent en une première partie d'émission, dans chaque processeur esclave, de son adresse, pendant l'intervalle de temps de la trame de signalisation qui lui est alloué, et une deuxième partie de réception, dans le processeur maître, pour la reconnaissance de cette adresse.

Le bus de transmission de données utilisé pour l'invention est conçu pour transmettre typiquement de l'information de gestion, ce qui conduit à des débits d'information limités, inférieurs à 1 Gbaud. Dans ces conditions, il est avantageux d'utiliser, pour la transmission des données, un premier bus série, par exemple un bus HDLC multi-points. Ceci permet en effet de gérer un ensemble de processeurs assez distants, c'est-à-dire situés à plus de quelques mètres ou dizaines de mètres les uns des autres, contrairement à un bus parallèle qui, tout en passant des débits bien supérieurs, serait tributaire du déphasage entre signaux sur les différents conducteurs et donc limité à une utilisation dans un équipement électronique bien localisé.

Un mode de réalisation particulier préféré du système de communication selon l'invention, qui concilie les principaux avantages requis, tels que la rapidité de signalisation, la simplicité d'implantation dans les processeurs et la possibilité d'éloigner entre eux ces derniers est remarquable en ce qu'il est conçu pour relier entre eux des processeurs du type MC 68302 de la société MOTOROLA, le bus de transmission de données étant un bus HDLC.

La description qui suit, en regard des dessins annexés, le tout donné à titre d'exemple non limitatif, fera bien comprendre comment l'invention peut être réalisée.

La figure 1 représente un ensemble de processeurs qui utilisent un support de communication selon l'invention.

La figure 2 est un diagramme de temps de signaux d'horloge utilisés pour la mise en oeuvre de l'invention, ainsi que de la trame de signalisation.

La figure 3 montre l'organisation de la trame de signalisation dont la synchronisation est indiquée à la figure 2.

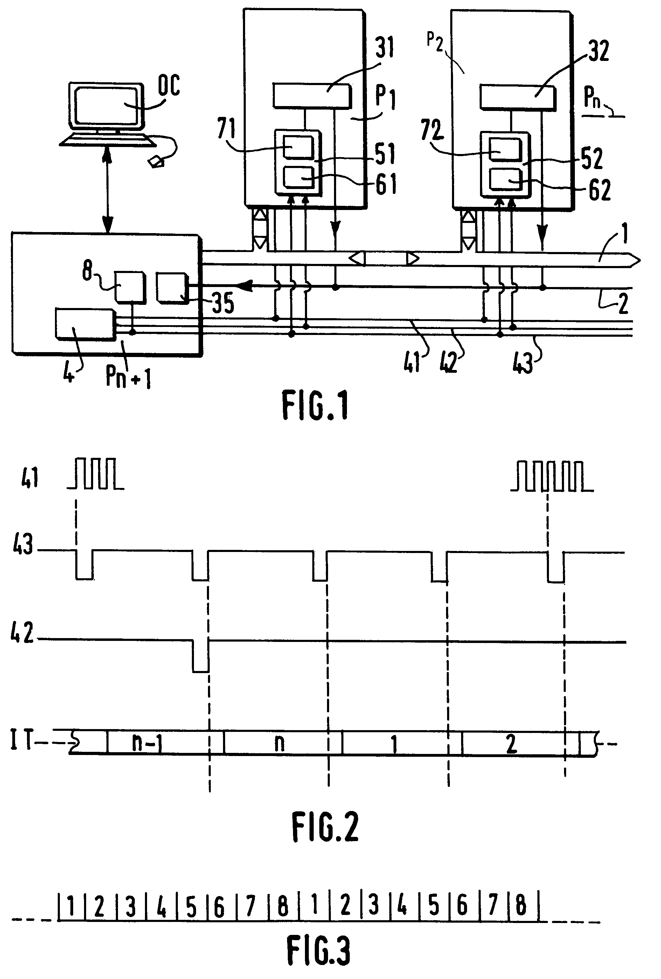

Sur la figure 1, parmi n + 1 processeurs P1, P2, ..., Pn, Pn+1, agencés en réseau, n sont des processeurs esclaves et l'un d'entre eux, référencé Pn+1 est un processeur maître. Le processeur maître est conçu pour, d'une part, recueillir et centraliser les informations internes de gestion de l'équipement électronique auquel appartiennent les n + 1 processeurs, et d'autre part, échanger ces informations avec un organe de contrôle OC, tel qu'une station de travail par exemple, cet organe de contrôle pouvant être situé à proximité de l'équipement électronique précité ou en être éloigné. Les n + 1 processeurs communiquent entre eux au moyen d'un bus 1 de transmission de données bidirectionnel. L'équipement électronique peut être notamment un réseau, dont la gestion est désormais normalisée par le CCITT. Il pourraît aussi s'agir d'un réseau hertzien pour lequel, à chaque emplacement de faisceau hertzien, un microprocesseur (qui s'identifie avec l'un des processeurs P1, P2, ..., Pn) est en charge du contrôle d'exploitation de l'équipement. Un autre exemple est celui d'un équipement ATM (Asynchronous Transfer Mode en anglais) constitué par une armoire, dans un central de télécommunications ou chez l'utilisateur, qui contient plusieurs cartes, réalisant chacune un traitement spécifique du mode ATM et comportant chacune un processeur (microprocesseur en l'occurrence) de contrôle de la carte. Tous ces processeurs communiquent entre eux par un bus d'exploitation, dont fait partie le bus 1 de la figure 1, qui peut être un bus parallèle, ou série, de préférence, pour permettre la mise en réseau de processeurs éloignés. Le bus 1 est un bus multi-points entre tous les processeurs de l'équipement, c'est-à-dire que chaque processeur peut émettre ou recevoir n'importe quel message sur ce bus, typiquement un message d'information de gestion, étant entendu que plusieurs processeurs peuvent recevoir en même temps le même message. Par contre, un seul processeur peut émettre à la fois. S'il s'agit d'un bus série, le bus 1 est de préférence un bus HDLC (High level Data Link Control). Pour plus de renseignements sur ce type de bus, on peut se reporter à l'ouvrage : "Téléinformatique, transport et traitement de l'information dans les réseaux et systèmes téléinformatiques" par César Macchi et al., 1979, publié par Dunod, pages 206 à 218. Le format d'une trame normalisée HDLC est le suivant :

| 8 bits | 16 bits | 8 bits | 8 N bits | 16 bits | 8 bits |
|---|---|---|---|---|---|
| fanion début. | adresse | contrôle | message : information (optionnelle) | CRC | fanion fin |

| Tableau 1 | | | | | |
|---|---|---|---|---|---|
| | | | | | |

Le processeur destinataire est réveillé sur l'identification de l'adresse dans le message.
Pour éviter la collision des messages sur le bus 1, il n'y a, à tout instant, jamais plus d'un processeur autorisé à émettre. Selon l'invention, comme d'ailleurs dans d'autres systèmes de communication où il existe un processeur maître, l'allocation d'émission des processeurs esclaves est centralisée par le processeur maître, ce qui signifie en pratique : un processeur quelconque qui veut émettre sur le bus 1 doit demander au préalable l'attribution de ce bus au processeur maître. Selon l'invention, la demande d'attribution du bus 1 se fait au moyen d'un deuxième bus de signalisation 2, spécifique.

Le bus 2, outre la principale fonction d'attribution du bus 1 sert aussi pour la fourniture d'autres informations au processeur maître, lesquelles n'impliquent pas nécessairement de retour.

De préférence, le bus de signalisation 2 est un bus unidirectionnel, dans le sens : processeurs esclaves vers le processeur maître. Sur la figure 1, le bus 2 est matérialisé sous la forme d'un conducteur unique. Chaque processeur esclave y dispose d'un droit d'émission dans un intervalle de temps qui est typiquement d'un octet mais qui peut aussi comporter plusieurs octets, si nécessaire, soit pour tous les processeurs, soit pour certains d'entre eux seulement. Les intervalles de temps appartiennent à une trame synchrone dont la durée, proportionnée au nombre n de cartes à gérer peut être courte, de l'ordre de quelques centièmes de secondes. Le bus de signalisation permet donc une signalisation rapide malgré son faible débit. L'information qu'il transporte permet d'informer le processeur maître, notamment sur :
- présence de carte (carte porteuse d'un processeur esclave),
- demande d'émission sur le bus 1,
- signal d'alarme...

On notera que l'emplacement de chaque intervalle de temps par rapport au début de la trame dépend de l'adresse physique de chaque processeur.

Pour exploiter la trame de signalisation précitée, il faut que les cartes des équipements électroniques comportent des moyens d'insertion de trame, ce qui nécessite du matériel additionnel et rend tout le système électronique encombrant et coûteux. Pour cette raison, il est praticulièrement avantageux que les processeurs P1, P2, ...., Pn, Pn+1 comportent eux-mêmes des moyens d'insertion de trame sur le bus 2, au moins en émission pour les n processeurs esclaves et au moins en réception pour le processeur maître. Les processeurs de la figure 2 sont de ce type et comportent de tels moyens référencés 31, 32 pour l'émission à partir des processeurs esclaves et 35 pour la réception dans le processeur maître. Pour cette raison, on utilise de préférence des processeurs du type MC 68302 de la société MOTOROLA, qui ont la particularité d'avoir 3 ports d'entrée/sortie multi-modes, identiques, permettant l'insertion de trame en émission et en réception.

Chaque processeur doit être à même de reconnaître l'intervalle de temps qui lui est affecté dans la trame (soit 1 intervalle parmi m, avec : m > n). Pour cela, une synchronisation est nécessaire, qui est réalisée au moyen de plusieurs fils d'horloge, et chaque processeur esclave doit comporter des premiers moyens de comparaison, pour identifier l'apparition cyclique d'un numéro d'ordre dudit intervalle de temps. Les fils d'horloge sont connectés d'une part à un générateur d'horloge tel que 4, qui est avantageusement intégré au microprocesseur maître et d'autre part à des entrées idoines de chaque processeur esclave. Il s'agit d'un premier fil d'horloge 41, qui fournit l'horloge de base, d'un deuxième fil de synchronisation de trame 42 et d'un troisième fil de synchronisation d'intervalle de temps dans la trame, 43.

La synchronisation précitée est représentée à la figure 2 par la forme des signaux d'horloge sur les fils 41, 42, 43. On a supposé que les intervalles de temps étaient égaux et représentaient chacun la longueur d'un octet.

Au moyen de ces signaux d'horloge il est possible d'actionner les premiers moyens de comparaison tels que 51, 52 (figure 1), qui consistent chacun en un premier compteur tel que 61, 62, des impulsions sur le conducteur 43, à chaque trame, et un comparateur tel que 71, 72, connecté au compteur correspondant. Chaque comparateur repère ainsi, dans la trame, un numéro d'ordre spécifiquement alloué au processeur auquel il appartient. Si, à cet instant, le processeur a une information à transmettre au processeur maître, il le fait dans les emplacements de bits à lui réservés dans son intervalle de temps spécifique. Si les informations possibles sont au nombre de 4 au maximum, 2 emplacements de bits suffisent. Si elles sont plus nombreuses, il faut prévoir un plus grand nombre d'emplacements de bits dans l'intervalle de temps alloué et, au besoin, dilater cet intervalle de temps de 1 ou plusieurs octets pour tel ou tel processeur esclave, ou pour tous. Les intervalles de temps IT sont représentés, figure 2, sous la forme d'octets et l'indication de leur numéro d'ordre montre comment est effectuée la synchronisation, avec un décalage (déphasage) un peu supérieur à un octet (pour ne pas compliquer le dessin, il est supposé que les n intervalles de temps adjacents occupent toute la trame, ce qui n'est cependant pas impératif).

Chaque information émise par un processeur esclave sur le bus 2 doit être reçue par le processeur maître Pn+1 grâce aux moyens d'insertion de trame en réception, 35, de préférence, avec l'identification simultanée de son origine. Pour ce faire, deux modes de réalisation des deuxièmes moyens de comparaison précités sont envisagés :

Un premier mode de réalisation, à caractère matériel, consiste à relier les moyens 35 à un compteur 8, dit deuxième compteur, qui compte, au sein du processeur Pn+1, les impulsions marquant le début des intervalles de temps à chaque trame de signalisation, soit les impulsions sur le conducteur 43. A tout instant, de façon non représentée, à la portée de l'homme de l'art, une correspondance est établie dans le processeur maître entre l'information reçue (éventuellement) en 35 et le numéro d'ordre, indiqué par le compteur 8, du processeur esclave habilité à émettre à cet instant, ce qui réalise l'identification souhaitée. Si l'on veut s'affranchir de la contrainte qui consiste à compter systématiquement les octets dans le processeur maître, il est loisible d'adopter un autre mode de réalisation à caractère plus logiciel que le précédent.

Selon ce deuxième mode, chaque processeur esclave récrit son adresse dans l'intervalle de temps de l'octet d'information, ce qui nécessite alors quelques emplacements de bits supplémentaires dans l'intervalle de temps par rapport au premier mode de réalisation. Ceci implique des moyens d'émission d'adresse par les processeurs P1, P2, ..., Pn et de réception d'adresse du processeur Pn+1, moyens non représentés car faisant partie intégrante des processeurs eux-mêmes.

La figure 3 représente deux octets de la trame de signalisation, soit 1 ou 2 intervalles de temps.

Dans un intervalle de temps, un premier emplacement de bit est réservé pour indiquer si l'information qui suit, dans l'intervalle, est valide (état logique "1") ou non (état logique "0"). Les 7 emplacements de bits suivants (respectivement 15) sont réservés à l'information proprement dite. Pour le premier mode de réalisation (relatif aux deuxièmes moyens de comparaison), ces 7 bits sont utilisés pour l'émission de la commande, c'est-à-dire de l'information de signalisation, ce qui est largement suffisant, et tous les intervalles de temps peuvent être réduits à 1 octet. Pour le deuxième mode, par contre, 5 ou 6 emplacements de bits peuvent être nécessaires pour l'émission de l'adresse. Le champ restant pour la commande risque de se révéler trop court et il faut alors élargir les intervalles de temps à 2 octets.

L'information de signalisation, de l'esclave vers le maître, peut impliquer un retour en sens inverse, comme c'est le cas pour une demande d'accès au bus de transmission de données 1. Dans ce cas, le processeur maître surveillant en permanence l'état d'occupation du bus 1, envoie l'autorisation d'émettre au processeur demandeur, compte tenu éventuellement d'une hiérarchie entre processeurs demandeurs pour des demandes rapprochées dans le temps, sous forme, dans le champ d'information défini au tableau 1 ci-dessus, de l'adresse du processeur concerné, qui réveille ce dernier pour l'autoriser à émettre, dans la trame du bus 1. Avec un bus HDLC, seul le processeur destinataire est réveillé, ce qui évite des traitements inutiles dans les autres processeurs.

En variante, on peut prévoir que le processeur maître dispose, lui aussi d'un intervalle de temps dans la trame de signalisation, ce qui porte cette dernière à n + 1 intervalles de temps utiles, auquel cas le bus 32 devient bidirectionnel et les moyens d'insertion de trame dans tous les processeurs doivent être conçus à la fois pour l'émission et la réception, ce que permettent d'ailleurs les microprocesseurs MC 68302 de MOTOROLA. Il devient alors possible de faire transiter l'autorisation d'émettre, du maître vers l'esclave, toujours par émission d'adresse du processeur esclave, par le bus de signalisation lui-même. Dans cette variante, le processeur maître doit comporter, de façon non représentée, des organes analogues aux organes tels que 31 et 51 (figure 1) des processeurs esclaves.

### EXEMPLE DE REALISATION :

On réalise un support de communication rapide selon l'invention avec 20 cartes d'équipement électronique, comportant chacune un microprocesseur du type MOTOROLA MC 68302. Les 20 microprocesseurs, dont un maître et 19 esclaves sont reliés entre eux par un bus de données HDLC multi-points et un bus de signalisation composé d'un seul fil. 3 fils d'horloge relient en outre un générateur d'horloge dans le processeur maître ou à partir d'une carte où sa présence est nécessaire, à chaque microprocesseur esclave. Chaque microprocesseur comportant 3 ports d'entrée/sortie multi-modes, les connexions des bus aux microprocesseurs sont effectuées comme suit,
pour chaque processeur esclave :
- l'un des 3 ports, programmé en mode HDLC est connecté au bus HDLC,
- un autre port, programmé en mode PCM 8 bits (Pulse Code Modulation, défini dans les modes d'accès du MOTOROLA MC 68302), est connecté au bus de signalisation,
   pour le processeur maître :
- l'un des 3 ports, programmé en mode HDLC est connecté au bus HDLC,
- un autre port, programmé en mode dit "réception synchro-prior 8 bits data" est connecté au bus de signalisation.

Le bus de signalisation est unidirectionnel dans le sens microprocesseurs esclaves vers microprocesseur maître. Chaque processeur esclave dispose d'un droit d'émission dans un intervalle de temps des deux octets dans une trame synchrone sur ce bus, dont un pour l'adresse du microprocesseur et l'autre pour l'information à transmettre au microprocesseur maître. Un débit de 9,6 kbits/s permet une trame synchrone de signalisation à 40 ms, ce qui peut être considéré comme très rapide, pour ce qui est du temps maximum requis pour fournir au processeur maître l'information d'un événement remarquable dans l'équipement électronique géré par les 20 processeurs.

On notera que la synchronisation des intervalles de temps entre processeurs pourraît s'effectuer avec deux fils d'horloge seulement. Il est en effet possible de réaliser la synchronisation de trame et d'intervalle de temps dans la trame à partir d'un seul fil, qui remplacerait les fils 42 et 43, mais ceci complique un peu le décodage des impulsions d'horloge reçues dans les processeurs.

Il est aussi possible d'utiliser, pour la transmission des données, un autre bus que le bus HDLC. Cependant, dans la mesure où ce bus est conçu pour transmettre des données d'information de gestion, le bus DHLC qui est un bus série mais qui permet tout de même des débits de 1 Gbaud est suffisant, étant donné que les débits à prévoir demeurent typiquement inférieurs à 0,5 Gbaud et même souvent inférieurs à 256 Mbauds. Par ailleurs, le fait d'être un bus série offre l'avantage de convenir pour des proceseurs séparés par de grandes distances, si nécessaire, en particulier pour un équipement électronique hertzien.

## Revendications

1. Système de communication entre n + 1 processeurs, parmi lesquels l'un est un processeur maître et n sont des processeurs esclaves, comportant un premier bus de transmission de données, caractérisé en ce qu'il comporte en outre d'une part un deuxième bus de signalisation série, de chaque processeur esclave vers le processeur maître, ainsi que des moyens de signalisation pour fournir au deuxième bus de signalisation une trame de signalisation synchrone composée de m intervalles de temps adjacents, parmi lesquels n sont alloués, spécifiquement, aux n processeurs esclaves, d'autre part au moins deux canaux d'horloge, dont un premier pour la transmission de l'horloge de base de ladite trame de signalisation, d'un générateur d'horloge, dans le processeur maître, aux processeurs esclaves, des premiers moyens de comparaison étant prévus pour identifier, dans chaque processeur esclave, l'apparition d'un numéro d'ordre dudit intervalle de temps qui lui est alloué, et des deuxièmes moyens de comparaison étant prévus, dans le processeur maître, pour identifier, à chaque trame de signalisation, les intervalles de temps alloués aux n processeurs esclaves.

2. Système de communication dont ledit premier bus transmet des données d'information de gestion selon la revendication 1, caractérisé en ce que, pour sa liaison avec lesdits processeurs, ces derniers comportent des moyens d'insertion de trame, sur ledit bus de signalisation, au moins en émission pour les n processeurs esclaves, et au moins en réception pour le processeur maître.

3. Système de communication selon la revendication 1 ou 2, caractérisé en ce qu'il comporte outre ledit premier canal d'horloge de base, un deuxième canal de synchronisation de trame et un troisième canal de synchronisation d'intervalle de temps dans la trame.

4. Système de communication selon l'une des revendications 1 à 3, caractérisé en ce que lesdits premiers moyens de comparaison consistent, dans chaque processeur esclave, en un premier compteur des impulsions qui marquent le début desdits intervalles de temps sur un canal d'horloge, à chaque trame de signalisation, et un comparateur, connecté au premier compteur, qui repère un numéro d'ordre spécifiquement alloué audit processeur esclave.

5. Système de communication selon la revendication 4, caractérisé en ce que lesdits deuxièmes moyens de comparaison consistent, dans le processeur maître, en un deuxième compteur desdites impulsions marquant à chaque trame de signalisation, le début desdits intervalles de temps, qui repère le numéro d'ordre alloué à chaque processeur esclave.

6. Système de communication selon la revendication 4, caractérisé en ce que lesdits deuxièmes moyens de comparaison, à caractère logiciel, consistent en une première partie d'émission, dans chaque processeur esclave, de son adresse, pendant l'intervalle de temps de la trame de signalisation qui lui est alloué, et une deuxième partie de réception, dans le processeur maître, pour la reconnaissance de cette adresse.

7. Système de communication selon l'une des revendications précédentes dont le premier bus de transmission de données est un bus série.

8. Système de communication selon la revendication 7 dont le premier bus de transmission de données est un bus HDLC.

9. Système de communication selon la revendication 8 conçu pour relier entre eux des processeurs du type MC 68302 de la société MOTOROLA, à 3 ports d'entrée/sortie multi-modes, connectés entre eux comme suit,
pour chaque processeur esclave :
- l'un des 3 ports, programmé en mode HDLC est connecté au bus HDLC,
- un autre port, programmé en mode PCM 8 bits, est connecté au bus de signalisation,
pour le processeur maître :
- l'un des 3 ports, programmé en mode HDLC est connecté au bus HDLC,
- un autre port, programmé en mode dit "réception synchro-prior 8 bits data" est connecté au bus de signalisation.

10. Système de communication entre n+1 processeurs, parmi lesquels l'un est un processeur maître et n sont des processeurs esclaves, comportant un premier bus de transmission de données d'information, comportant en outre un deuxième bus de signalisation série bidirectionnel entre les n+1 processeurs, ainsi que des moyens de signalisation pour fournir au deuxième bus de signalisation une trame de signalisation composée de m intervalles de temps adjacents parmi lesquels n + 1 sont alloués, spécifiquement, aux n + 1 processeurs, d'autre part des moyens de synchronisation de n + 1 intervalles de temps dans les n+1 processeurs, des premiers moyens de comparaison étant prévus pour identifier, dans chaque processeur, l'apparition d'un numéro d'ordre dudit intervalle de temps qui lui est alloué, et des deuxièmes moyens de comparaison étant prévus, dans le processeur maître, pour identifier, à chaque trame de signalisation, les intervalles de temps alloués aux n+1 processeurs.

11. Equipement électronique incorporant un système de communication rapide selon l'une des revendications 1 à 10.
